# EUROPEAN PATENT APPLICATION

(11) **EP 4 280 344 A1**
(43) Date of publication of application: **22.11.2023**
(21) Application number: 23166765.0
(22) Date of filing: 05.04.2023
(51) Int. Cl.: H01M 10/48, H01M 50/247, H01M 50/296, H01M 50/507, H01M 10/42, H01M 50/503

(54) **BATTERY PACK AND CHARGER**

(30) Priority: 20.05.2022 US 202263344295 P; 23.06.2022 US 202263354974 P
(71) Applicant: Techtronic Cordless GP, Anderson, SC 29621 (US)
(72) Inventor: LOEBIG, Jeff, Charlotte, 28262 (US); NG, Wing Leung, Kwai Chung (HK); LIN, Qiang Qun, Dongguan City (CN); LI, Jin, Dongguan City (CN)
(74) Representative: Novagraaf Group

(57) **Abstract**

A battery pack includes a housing, and a cover coupled to the housing. The housing and the cover define an interior to receive a battery. The battery pack also includes a button movably coupled to the housing. The button includes a latch. The button moves from a first position relative to the housing to a second position relative to the housing. The battery pack also includes a switch disposed within the housing. The button contacts the switch when the button is in the second position.

## Description

### CROSS-REFERENCE TO RELATED APPLICATIONS

This application claims priority to U.S. Provisional Application No. 63/354,974, filed June 23, 2022, and to U.S. Provisional Application No. 63/344,295, filed May 20, 2022, the entire contents of each of which are incorporated herein by reference.

### TECHNICAL FIELD

The present disclosure relates to battery packs and battery chargers.

### SUMMARY

In one independent aspect, a battery pack includes a housing, and a cover coupled to the housing. The housing and the cover define an interior to receive a battery. The battery pack also includes a button movably coupled to the housing. The button includes a latch. The button moves from a first position relative to the housing to a second position relative to the housing. The battery pack also includes a switch disposed within the housing. The button contacts the switch when the button is in the second position.

In another independent aspect, a battery pack includes a housing, and a cover coupled to the housing. The housing and the cover define an interior to receive a battery. The battery pack also includes a plurality of electric contacts disposed within the interior. The cover includes a plurality of slots that provide access to the plurality of electric contacts. Each of the slots extends in more than one direction, to facilitate attachment of the battery pack to separate components along multiple directions.

In another independent aspect, a system includes a battery pack. The battery pack includes a housing, and a cover coupled to the housing. The housing and the cover define an interior to receive a battery. The battery pack also includes a first universal serial bus connector that is at least partially disposed within the interior and is accessible from outside of the battery pack. The system also includes a battery charger having a second universal serial bus connector configured to couple to the first universal serial bus connector to charge the battery pack.

Other aspects of the disclosure will become apparent by consideration of the detailed description and accompanying drawings.

### BRIEF DESCRIPTION OF THE DRAWINGS

FIG. 1 is a front, top perspective view of a battery pack in accordance with one embodiment.
FIG. 2 is a rear, top perspective view of the battery pack.
FIG. 3 is an exploded view of the battery pack.
FIG. 4 is a front, top perspective view of a housing of the battery pack.
FIG. 5 is a rear, top perspective view of the housing of the battery pack.
FIG. 6 is a front, top perspective view of a cover of the battery pack.
FIG. 7 is a bottom perspective view of the cover of the battery pack.
FIG. 8 is a perspective view of a button of the battery pack.
FIG. 9 is a side view of the button of the battery pack.
FIG. 10 is a perspective view of the battery pack, with the cover removed.
FIG. 11 is a perspective view of the battery pack, with both the cover and one of the buttons removed, illustrating a biasing element.
FIG. 11A is a perspective view of a set of electric contacts of the battery pack.
FIG. 12 is a partial, perspective view of the battery pack, illustrating the button and the biasing element.
FIG. 13 is a cross-sectional view of the battery pack, illustrating the button and the biasing element.
FIG. 14 is a cross-sectional view of the battery pack, illustrating the biasing element, the button, and a switch for activating a fuel gauge indicator.
FIG. 15 is a perspective view of the battery pack, illustrating the switch and a seal ring for the switch.
FIG. 16 is a perspective view of the battery pack, illustrating a rubber pad for the housing, and light pipes for the fuel gauge indicator.
FIG. 17 is a perspective view of the battery pack, illustrating a printed circuit board and a cell frame positioned underneath the printed circuit board.
FIGS. 18 and 19 are cross-sectional views of the battery pack, illustrating a first universal serial bus (USB) connector.
FIG. 20 is a perspective view of a battery charger for the battery pack, illustrating a second universal serial bus (USB) connector configured to engage the first universal serial bus connector
FIG. 21 is a perspective view of the battery charger, illustrating an embodiment in which the battery charger does not include electric contacts, and includes a keyed region.
FIG. 22 is a perspective view of the battery pack, illustrating a corresponding keyed region for mating with the keyed region of the battery charger of FIG. 21.
FIG. 23 is a perspective view of a portion of the battery pack of FIG. 22, illustrating the electric contacts within the battery pack.
FIG. 24 is a perspective view of another embodiment of the biasing element.
FIG. 25 is a perspective view of the battery pack, illustrating an opening through the cell frame.
FIGS. 26 and 27 are side views of the battery pack, illustrating how the battery pack may be attached to different tools in different directions.

### DETAILED DESCRIPTION

Before any aspects are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

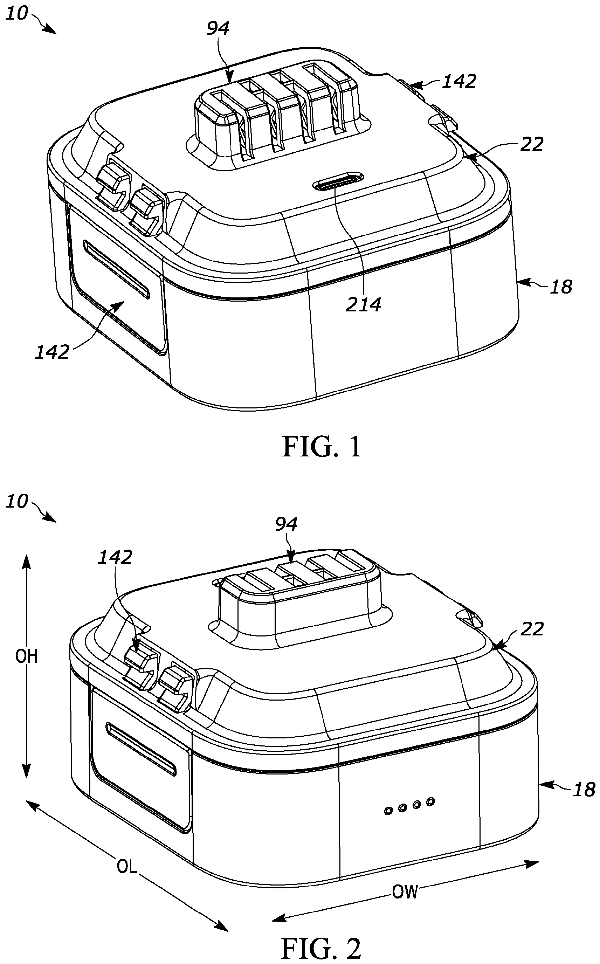

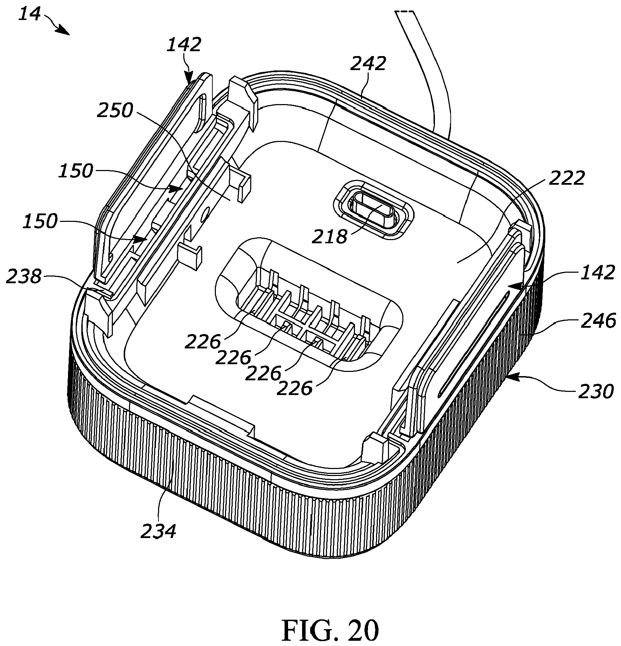

FIGS. 1-19 illustrate an exemplary battery pack 10, and FIG. 20 illustrates an exemplary battery charger 14 for the battery pack 10 (or other battery pack). The battery pack 10 may be used to power various components, including but not limited to kitchen appliances (e.g., handheld blenders, tabletop blenders, hand mixers, food choppers, food processors, etc.). In some embodiments, the battery pack 10 is a 12V battery pack, although other embodiments include different types of battery packs 10 (e.g., 10V battery pack, 14V battery pack, etc.).

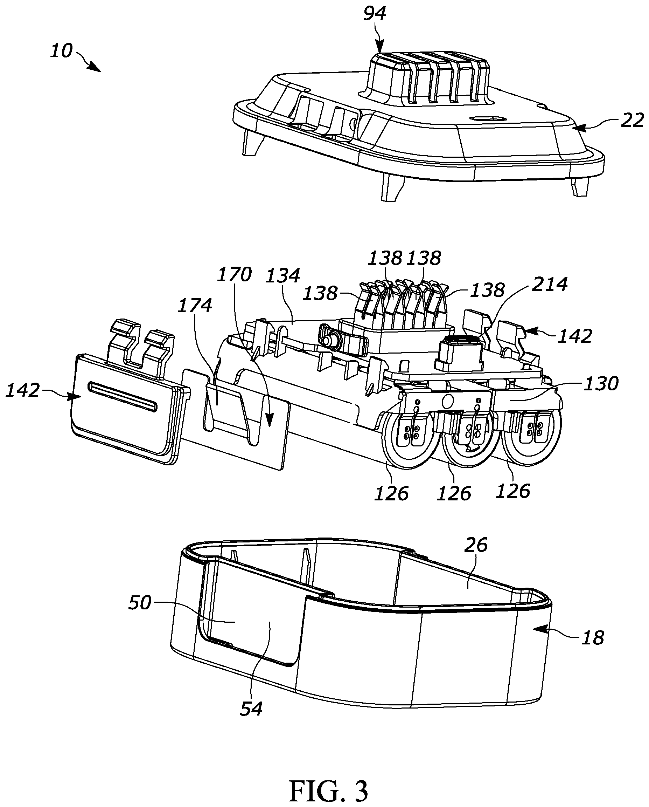

With reference to FIGS. 1-3, in the illustrated embodiment the battery pack 10 includes a housing 18, and a cover 22 coupled (e.g., releasably coupled) to the housing 18. The housing 18 and the cover 22 define an interior space 26 (FIG. 3) for housing one or more components of the battery pack 10. While the illustrated embodiment includes a single housing 18 and a single cover 22, in other embodiments the battery pack 10 includes for example both a top cover 22 and a bottom cover 22, or a top cover 22 and a side cover 22, or two top covers 22, or otherwise includes multiple covers that each couple (e.g., releasably couple) to the housing 18. In some embodiments, the cover 22 is pivotally coupled to the housing 18, and/or remains attached to the housing 18 at all times (rather than being completely removable). In some embodiments, the battery pack 10 does not include a cover 22.

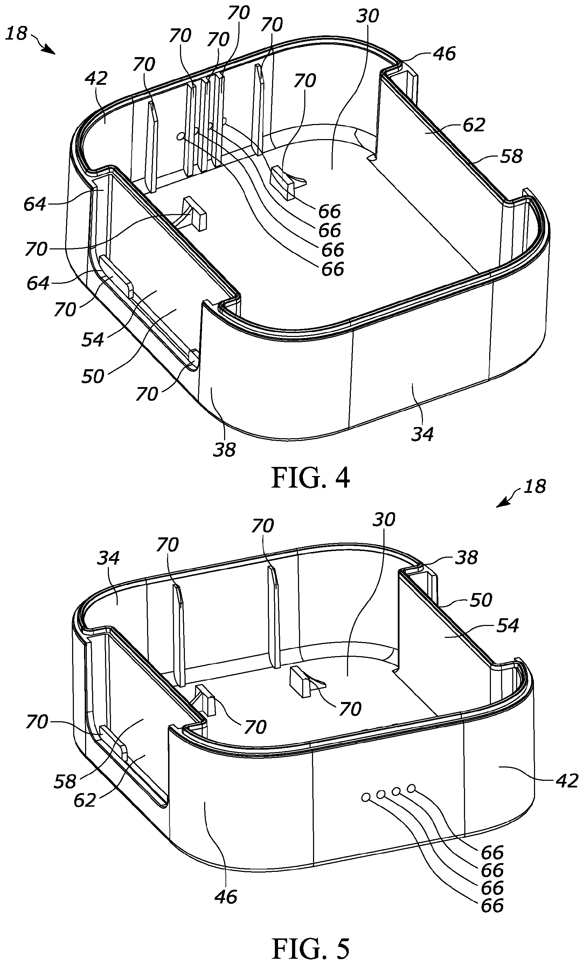

With reference to FIGS. 4 and 5, the housing 18 includes a bottom (e.g., generally planar) wall 30, a first sidewall 34 extending upwardly from the bottom wall 30, a second sidewall 38 extending upwardly from the bottom wall 30, a third sidewall 42 extending upwardly from the bottom wall 30, and a fourth sidewall 46 extending upwardly from the bottom wall 30. Other embodiments include different numbers of sidewalls than that illustrated (e.g., five or six sidewalls). In the illustrated embodiment, the bottom wall 30 has a generally rectangular shape when viewed from either above or below (e.g., with softened and/or rounded corners), although other embodiments may include other shapes and sizes than that illustrated (square, oval, etc.). As illustrated in FIGS. 4 and 5, the second sidewall 38 defines a recessed region 50 having an inner wall 54 that is spaced inwardly from, and extends parallel to, a remaining portion of the second sidewall 38. Similarly, the fourth sidewall 46 defines a recessed region 58 that includes an inner wall 62 that is spaced inwardly from, and extends parallel to, a remaining portion of the fourth sidewall 46. In other embodiments, the housing 18 includes different numbers of recessed regions (e.g., three recessed regions, or four recessed regions) that are located on one or more of the sidewalls 34, 38, 42, 46. Each recessed region (e.g., recessed region 50 and/or 58) may include a channel or channels 64 (FIG. 4) extending along at least a portion of a periphery of the recessed region to receive and retain a portion of a button 142 (FIG. 3).

With continued reference to FIGS. 4 and 5, the housing 18 additionally includes apertures 66. In the illustrated embodiment, the apertures 66 extend through the third sidewall 42. In other embodiments, one or more of the apertures 66 extend through other sidewalls, through the cover 22, or for example across both the sidewall 42 (or other sidewall) and a top wall (e.g., cover 22). In the illustrated embodiment, the housing 18 includes four generally circular apertures 66, spaced evenly apart from one another and located generally centrally along the third sidewall 42. Other embodiments may include different numbers and spacing and location of apertures 66 than that illustrated, and also different shapes of apertures 66. For example, in some embodiments one or more of the apertures 66 may be larger than other apertures 66, or the apertures 66 may be arranged vertically rather than horizontally as illustrated in FIGS. 4 and 5. As described further below, the apertures 66 may be used, for example, as part of a fuel gauge indicator for the battery pack 10, and may provide access for visible light to indicate a fuel gauge level for the battery pack 10 (e.g., an indication of remaining battery power). In some embodiments, the fuel gauge indicator may also, or alternatively, indicate a status and/or errors of the battery pack 10. For example, the fuel gauge indicator may indicate charging, critical battery level, fully charged, power output through USB, updating firmware, over current, over temperature, recoverable errors (e.g., reset by releasing a trigger and re-activating a trigger of a tool), non-recoverable errors (e.g., reset by removing and reinstalling the battery pack 10), temporary errors (e.g., recover over time or by reset), and/or permanent errors (e.g., need maintenance).

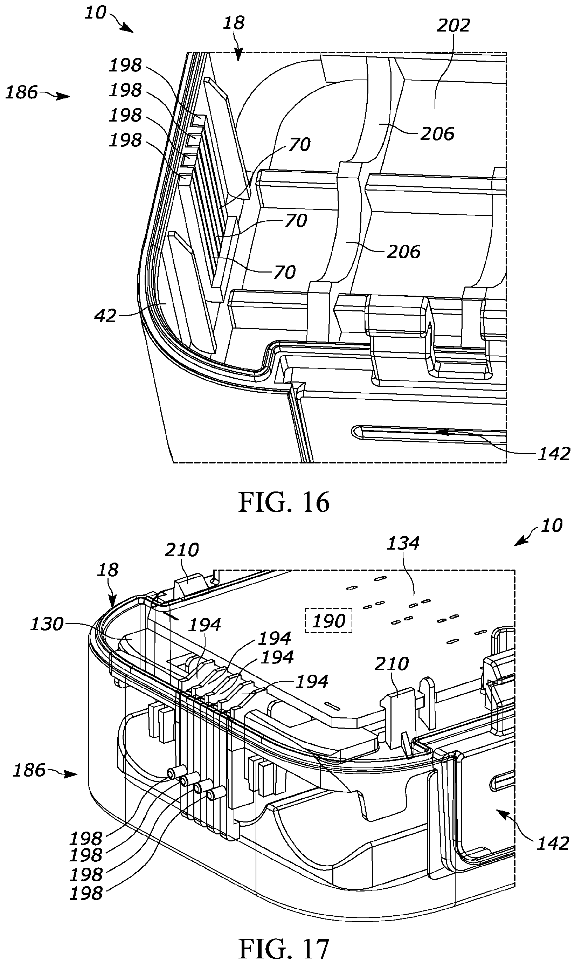

With continued reference to FIGS. 4 and 5, in the illustrated embodiment the housing 18 additionally includes guide elements 70 (e.g., protrusions, ribs, rails, slots, or other features) that facilitate guiding and positioning of various other components within the battery pack 10. For example, and as illustrated in FIG. 4, the housing 18 includes a set of guide elements 70 that are positioned along an interior of the third sidewall 42. The guide elements 70 along the interior of the third sidewall 42 are protruding ribs, and extend parallel to one another. The housing 18 may also include a set of guide elements 70 positioned along the bottom wall 30, and guide elements 70 that are positioned within the recessed regions 50, 58. As illustrated in FIG. 5, the housing 18 may additionally include guide elements 70 positioned along an interior of the first sidewall 34. Other embodiments include different numbers and arrangements of guide elements 70 than that illustrated. In some embodiments, the housing 18 does not include guide elements 70. In some embodiments, the guide elements 70 on the first and third sidewalls 34, 42 are be used to install a cell frame (e.g., cell frame 130 seen in FIG. 3). Additionally, in some embodiments the guide elements 70 on the bottom wall 30 are used to install cells (e.g., cells 126 seen in FIG. 3) and/or a pad (e.g., pad 202 seen in FIG. 16). The guide elements 70 within the recessed regions 50, 58 may be used to install a biasing element or elements (e.g., spring plate 170 seen in FIG. 3) and/or a button or buttons (e.g., button 142 seen in FIG. 3)

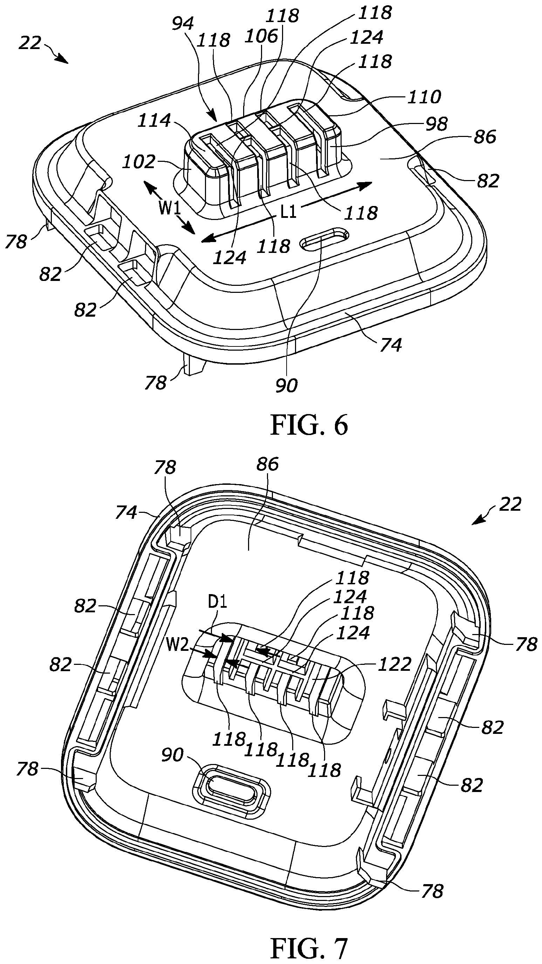

With reference to FIGS. 6 and 7, in the illustrated embodiment the cover 22 has a generally rectangular shape when viewed from above or below, although other embodiments may include other shapes and sizes than that illustrated (e.g., square, oval, etc.). The cover 22 includes an outer rim 74 that extends around a periphery of the cover 22, and projections 78 extending below the outer rim 74. The projections 78 may be used, for example, to couple (e.g., releasably couple) the cover 22 to the housing 18. For example, the projections 78 may snap into, or otherwise engage, one or more regions of the housing 18. Other embodiments include different elements (e.g., hooks, fasteners, etc.) to couple the cover 22 to the housing 18.

With continued reference to FIGS. 6 and 7, the cover 22 additionally includes apertures 82 along the outer rim 74. As described further herein, the apertures 82 are used to receive and guide latch portions of buttons on the battery pack 10. The illustrated embodiment includes four apertures 82 (two apertures 82 that are positioned to extend above the recessed region 50 and two other apertures 82 that are positioned to extend above the recessed region 58), although other embodiments include different numbers and arrangements of apertures 82 than that illustrated. In some embodiments the cover 22 does not include the apertures 82.

With continued reference to FIGS. 6 and 7, the cover 22 additionally includes an inner wall 86 (e.g., having planar surfaces) that is positioned inwardly of (and for example raised relative to) the outer rim 74, and an aperture 90 positioned along and extending through the inner wall 86. As described further herein, the aperture 90 may provide access, for example, to a universal serial bus (USB) connector. In other embodiments, the inner wall 86 is recessed relative to the outer rim 74, or is co-planar with the outer rim 74, and/or does not include the aperture 90.

With continued reference to FIGS. 6 and 7, in the illustrated embodiment the cover 22 additionally includes a protruding region 94 that protrudes upwardly from the inner wall 86 (e.g., generally within a center of the inner wall 86). The protruding region 94 has an elongate, generally rectangular shape (e.g., with softened and/or rounded corners) when viewed from above, although other embodiments include different shapes and sizes than that illustrated (e.g., square, oval, etc.). With reference to FIG. 6, the protruding region 94 includes a first sidewall 98 that extends upwardly from the inner wall 86, a second sidewall 102 that extends upwardly from the inner wall 86, a third sidewall 106 that extends upwardly from the inner wall 86, and a fourth sidewall 110 that extends upwardly from the inner wall 86. The protruding region 94 additionally includes an upper wall 114 spaced from (and for example extending parallel to) the inner wall 86.

With continued reference to FIGS. 6 and 7, the protruding region 94 includes apertures 118 (e.g. slots). Each of the apertures 118 extends (e.g., 90 degrees) through both a portion of the upper wall 114 and also the first sidewall 98. As illustrated in FIG. 7, the protruding region 94 defines a volume of space 122 within the interior space 26 of the battery pack 10. The apertures 118 provide access to the volume of space 122 both from above the cover 22 (i.e., vertically down through the portions of the apertures 118 that extend along the upper wall 114), and also from the side (i.e., laterally through the portions of the apertures 118 that extend along the first sidewall 98). In other embodiments, the protruding region 94 is located closer to a corner or side of the cover 22 rather than centrally along the inner wall 86, and/or may include different numbers and arrangements of apertures 118 than that illustrated. For example, in some embodiments, each of the apertures 118 extends along the upper wall 114 and along the first sidewall 98, and also extends at least partially along one of the other sidewalls (e.g., the third sidewall 106). In some embodiments, two or more of the apertures 118 extend parallel to one another. In some embodiments, the protruding region 94 includes one or more apertures 118 that extend along a first direction, and one or more apertures that extend along a second, different direction. In the illustrated embodiment, the protruding region 94 includes six apertures 118. As illustrated in FIGS. 6 and 7, bars 124 separate some of the apertures 118 from one another.

In yet other embodiments, the cover 22 does not include a protruding region 94 having the apertures 118. Instead, the apertures 118 are located for example at least partially along the inner wall 86. The apertures 118 may extend, for example, partially along the inner wall 86 and also at least partially along the outer rim 74, and/or along other areas of the cover 22.

With reference to FIG. 6, in the illustrated embodiment the protruding region 94 has a length L1 measured generally along a direction that extends between two side of the cover 22 (e.g., and between one of the set of apertures 82 along the outer rim 74 and the other set of apertures 82 along the outer rim 74). The protruding region 94 also has a width W1 that extends perpendicular to the length L1. In the illustrated embodiment, the length L1 is greater than the width W1. In some embodiments, the length L1 is at least twice as large as the width W1. In some embodiments, a ratio of the length L1 to the width W1 is between 2:1 and 3:1, or between 2:1 and 4:1, or between 2:1 and 5:1. Other embodiments include different values and ranges of values.

With reference to FIG. 7, the apertures 118 are spaced evenly apart from one another along the direction of the length L1 by distances D1, although in other embodiments some of the apertures 118 are closer together to one another than other apertures 118. As illustrated in FIG. 7, each of the apertures 118 has a width W2 (measured along the same direction as the length L1 of the protruding region 94). In the illustrated embodiment, each of the apertures 118 has the same width W2, although in other embodiments the widths W2 may vary. In some embodiments, the distance D1 between two apertures 118 is greater than the width W2 of each of the two apertures 118. In some embodiments, a ratio of the distance D1 between two apertures 118 and the width W2 of each of the two apertures 118 is between 1:1 and 3:1, or between 1:1 and 5:1, or between 1:1 and 7:1. Other embodiments include different values and ranges of values.

With reference to FIG. 2, the battery pack 10 additionally has an overall length OL of between 75mm and 85mm, and an overall width OW of between 65mm and 75mm. Other embodiments include different values and ranges of values for the overall length OL and the overall width OW (e.g., an OL of between 60mm and 100mm and an OW of between 50mm and 90mm). In the illustrated embodiment, the battery pack 10 also has an overall height OH (extending from a bottom of the housing 18 to a top of the protruding region 94) of between 40mm - 60mm. Other embodiments include different values and ranges of values for the height OH (e.g., an OH of between 30mm and 70mm). In some embodiments, a ratio of the overall length OL to the overall height OH is between 1:1 and 1:5:1, or between 1:1 and 2:1. Additionally, in some embodiments, a ratio of the overall width OW to the overall height OH is between 1:1 and 1:5:1, or between 1:1 and 2:1. Other embodiments include different values and ranges of values. Overall, the battery pack 10 may be sized and shaped, for example, to removably fit onto and power a separate component (e.g., a handheld blender, tabletop blender, or other handheld or tabletop device).

With reference to FIG. 3, in the illustrated embodiment the battery pack 10 additionally includes one or cells 126, a cell frame 130 covering at least a portion of the cells 126, a printed circuit board 134 positioned above the cells 126 and the cell frame 130, and a plurality of electric contacts 138 that are coupled to the printed circuit board 134 and extend generally vertically upwardly from the printed circuit board 134. In the illustrated embodiment, each of the electric contacts 138 includes at least one electric contact arm 140 that may be flexed, although other embodiments may include different types of electric contacts 138 and different arrangements of electric contacts 138 than that illustrated (e.g., arrangements in which some of the electric contacts 138 are oriented in a first direction and other electric contacts 138 are oriented in a different direction).

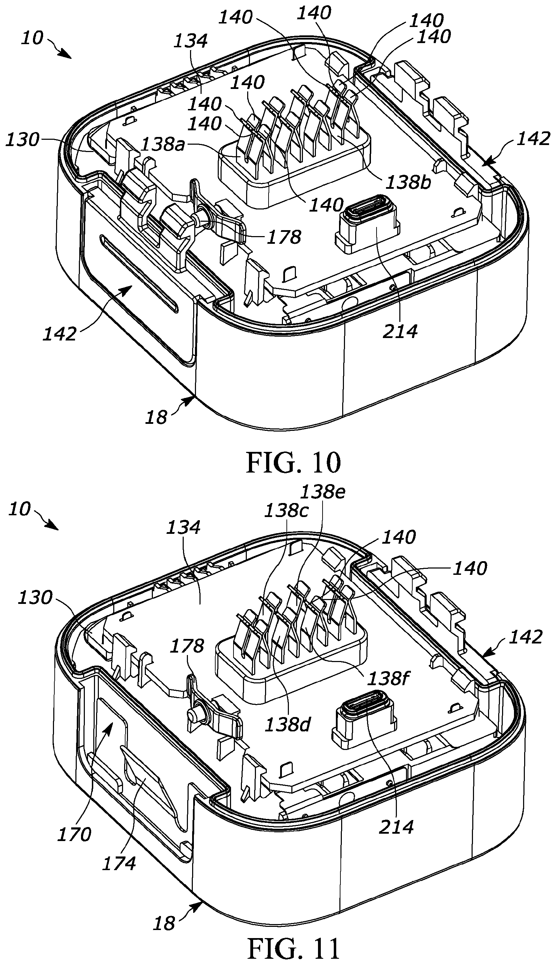

In the illustrated embodiment, and with reference to FIGS. 10-11A, the electric contacts 138 include a first electric contact 138a having four flexible arms 140 extending generally vertically upwardly. The electric contacts 138 also include a second electric contact 138b having four flexible arms 140 extending generally vertically upwardly. The arms 140 of the first electric contact 138a are aligned with one another, forming two generally v-shaped receiving ends, such that the arms 140 of the first electric contact 138a may be flexed apart when the battery pack 10 is coupled to another component. Similarly, the arms 140 of the second electric contact 138a are aligned with one another, forming two generally v-shaped receiving ends, such that the arms 140 of the second electric contact 138b may be flexed apart when the battery pack 10 is coupled to another component.

As illustrated in FIGS. 10-11A, the electric contacts 138 also include a third electric contact 138c, a fourth electric contact 138d, a fifth electric contact 138e, and a sixth electric contact 138f Each of the third electric contact 138c, the fourth electric contact 138d, the fifth electric contact 138e, and the sixth electric contact 138f includes two flexible arms 140 extending generally vertically upwardly. The arms 140 are aligned with one another, forming four additional v-shaped receiving ends. Overall, the electric contacts 138 form eight such v-shaped receiving ends, generally aligned in two rows of four each. Additionally, the first and second electric contacts 138a, 138b are positioned on opposite ends of the electric contacts 138. Other embodiments may include different arrangements of electric contacts than that illustrated, and also different types and numbers of electric contacts than that illustrated.

With reference to FIGS. 3, 6, 7, and 10-11A, the cells 126, the cell frame 130, the printed circuit board 134, and the electric contacts 138 are all positioned within the interior space 26 of the battery pack 10, and at least a portion of each electric contact 138 extends upwardly the into the volume of space 122 defined by the protruding region 94 of the cover 22. Thus, each of the electric contacts 138 is accessible vertically through one of the apertures 118 (i.e., along the portions of the apertures 118 that extend along the upper wall 114 of the cover 22), and is also accessible from the side (i.e., laterally, through the portions of the apertures 118 that extend along the first sidewall 98). The battery pack 10 may be connected to a first component (e.g., handheld blender) by vertically attaching the battery pack 10 to the first component and connecting the electric contacts 138 to mating electric contacts on the first component. The battery pack 10 may alternatively be connected to a different, second component (e.g., tabletop blender) by sliding the battery pack 10 laterally onto the second component, and connecting the electric contacts 138 to mating electric contacts on the second component. The direction of attachment may depend, for example, on the orientation and positioning of mating electric contacts on the various components used in conjunction with the battery pack 10.

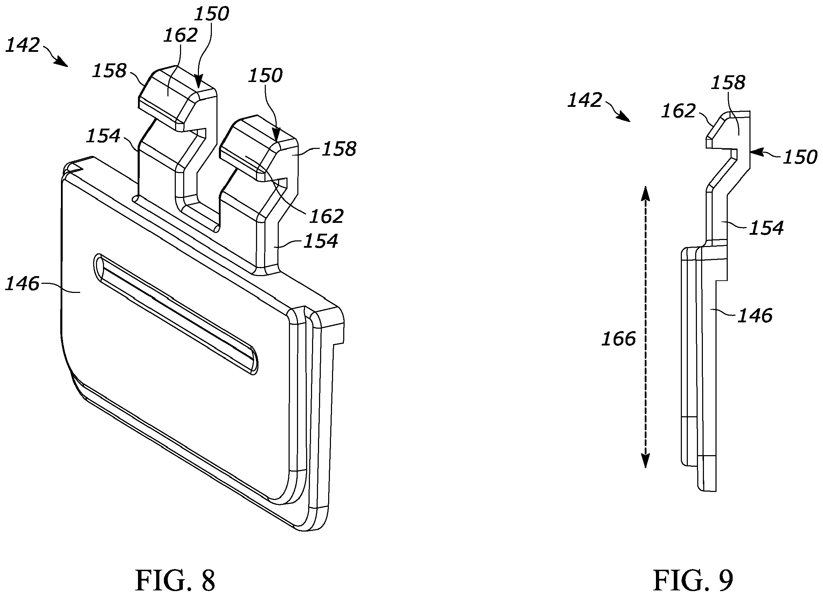

With reference to FIGS. 3, 8, and 9, in the illustrated embodiment the battery pack 10 additionally includes one or more buttons 142 that are positioned along one or more sides of the housing 18. In the illustrated embodiment, the battery pack 10 includes two buttons 142, located on opposite sides of the housing 18. As illustrated in FIGS. 8 and 9, the buttons 142 each include a main body 146, and at least one latch 150 protruding from the main body 146. In the illustrated embodiment, each button 142 includes two latches 150 protruding (e.g. parallel to one another) from one side of the main body 146. Each of the latches 150 includes an arm 154 (e.g., flexible arm), and an enlarged head 158 at the end of the arm 154. The arm 154 includes a bent, or non-linear profile as viewed from the side (FIG. 9). The head 158 includes an angled surface 162 that extends at an oblique angle to a vertical axis 166. In the illustrated embodiment, the main body 146 extends parallel to the vertical axis 166.

Other embodiments include different numbers of latches 150 than that illustrated (e.g. one latch 150, or three latches 150, or more than three latches 150), and/or include different shapes and sizes of latches 150 than that illustrated. In some embodiments, the battery pack 10 includes just a single button 142, or includes more than two buttons 142 (e.g., four buttons 142). Additionally, in some embodiments, the buttons 142 are located at different locations, and in different orientations, than that illustrated. For example, while the illustrated embodiment includes two buttons 142 that are generally oriented vertically along opposing sidewalls of the housing 18, in other embodiments one or more of the buttons 142 are oriented perpendicular to, or at an oblique angle, relative to a vertical direction defined by the vertical axis 166. Additionally, in some embodiments one or more of the buttons 142 are located on (e.g., above) the cover 22 instead of along a side of the housing 18. In some embodiments, the battery pack 10 does not include any buttons 142.

With reference to FIGS. 3 and 10-12, in the illustrated embodiment each of the buttons 142 is sized and shaped to fit at least partially into one of the recessed regions 50, 58 along the sides of the housing 18. The buttons 142 may be inserted, for example vertically along or parallel to the vertical axis 166 into the housing 18, and into the channels 64 defined along the recessed regions 50, 58. As illustrated in FIGS. 1, 2, 6, and 7, once the buttons 142 are installed, the enlarged heads 158 protrude through the apertures 82 on the cover 22.

With reference to FIGS. 3, 11, and 12, the battery pack 10 additionally includes one or more biasing elements 170 (e.g., spring plates) that are positioned within the recessed regions 50, 58, and are held in place for example with one or more of the guide elements 70 located on the housing 18. In the illustrated embodiment, the biasing elements 170 include at least one angled spring arm 174 that extends away from the housing 18 and presses against and biases the main body 146 of the button 142 in a direction away from the housing 18 (i.e., along a direction that is perpendicular to the vertical axis 166), and away from the internal components of the battery pack 10 (e.g., the cells 126, the cell frame 130, the printed circuit board 134, and the electric contacts 138). In the illustrated embodiment, each biasing element 170 includes a single, central angled spring arm 174. In other embodiments, the biasing element 170 includes more than one angled spring arm 174, or spring arms located in other positions than that illustrated. In yet other embodiments, the biasing elements 170 include other types of springs and/or flexible arms that bias the buttons 142 (e.g., coiled springs). In some other embodiments, the biasing elements 170 are located on (e.g. integrally formed with) the housing 18 or the button 142 itself. In some embodiments, the battery pack 10 does not include biasing elements 170.

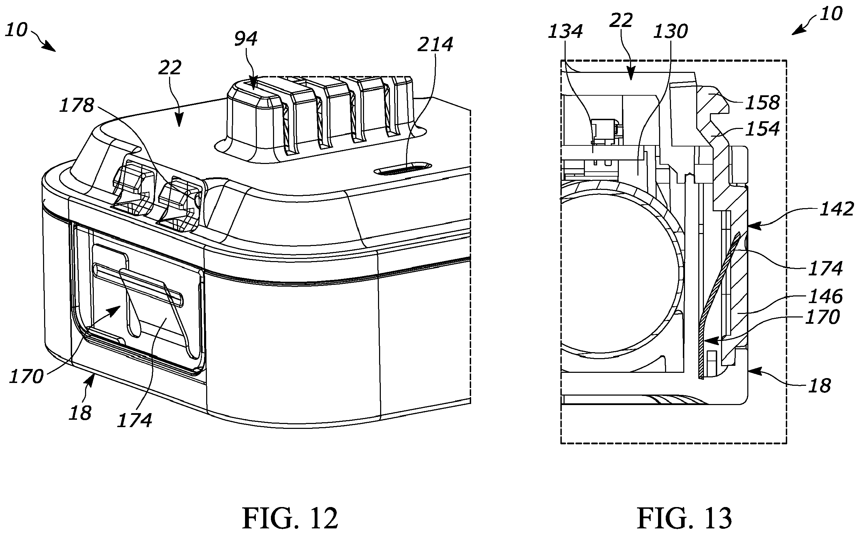

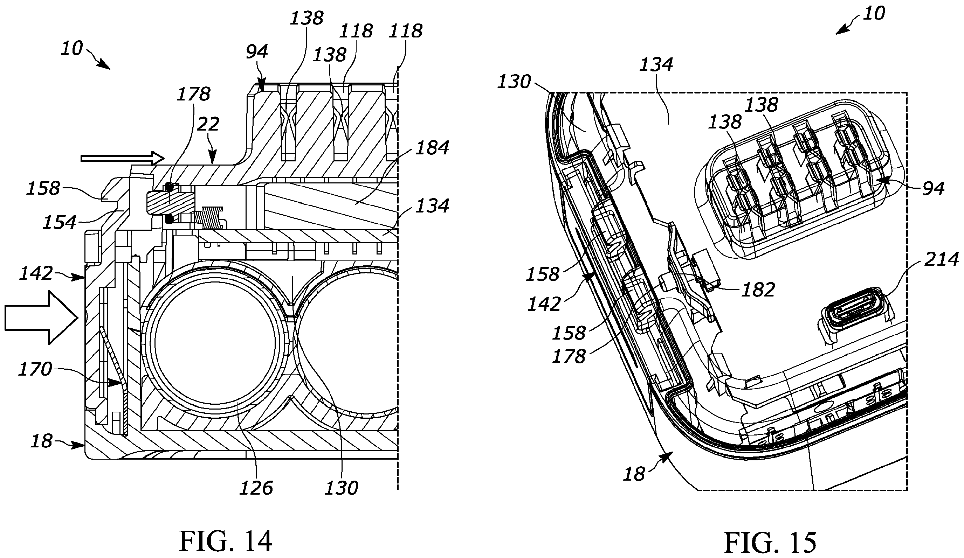

With reference to FIGS. 13 and 14, at least a portion of one of the buttons 142 may be pressed laterally inwardly (e.g., against the force of the biasing element 170) from a first position to a second position, and in a direction toward the interior space 26 of the battery pack 10. The button 142 may be pressed manually, or by connecting the battery pack 10 to another component. For example, in some embodiments, the action of connecting (e.g., installing) the battery pack 10 to a mating housing of another component (e.g., a handheld blender, tabletop blender, or other device) causes a portion of the button 142 (or the entire button 142) to be moved laterally inwardly within the recessed region 50 or 58. The mating housing of the other component may include, for example, a surface or surfaces that engage the angled surface 162 of the enlarged head 158, and thereby move and flex the arm 154, causing the arm 154 and the enlarged head 158 to move laterally inwardly (see the arrow in FIG. 13). This movement may then force the entire button 142 to move laterally inwardly, against the biasing force of the biasing element 170. Once the battery pack 10 has been connected to the mating housing of the other component, the button 142 may then move laterally outwardly again, via the biasing force of the biasing element 170.

With reference to FIGS. 12, 14 and 15, in the illustrated embodiment the battery pack 10 additionally includes at least one switch 178 (e.g., toggle switch, pole switch, and/or touch switch). In the illustrated embodiment, the battery pack 10 includes a single switch 178. In other embodiments the battery pack 10 includes for example two switches 178 (one on either side of the battery pack 10). The switch 178 is aligned with the button 142 (e.g., with the arm 154 and/or the enlarged head 158), such that when the button 142 moves laterally inwardly, the switch 178 is contacted and pressed / activated by the button 142. As illustrated in FIG. 14, the switch 178 is coupled to the printed circuit board 134, and extends through a portion of the cover 22. In some embodiments, the switch 178 extends through a portion of one of the sidewalls 34, 38, 42, 46 (e.g., instead of through the cover 22). Additionally, in some embodiments, the switch 178 is contacted and pressed / activated by the spring arm 174 (e.g., instead of the button 142). As illustrated in FIG. 15, in the illustrated embodiment a seal 182 (e.g., seal ring) is coupled to and extends around the switch 178, to protect and seal the switch 178 (e.g. from ingress of water). The battery pack 10 may include other sealing features. For example, and with reference to FIG. 14, the illustrated battery pack 10 may include a contacts seat 184. The electrical contacts 138 extend upwardly from the contacts seat 184. In some embodiments, the battery pack 10 includes a zero (or near zero) clearance between the contacts seat 184 and the protruding region 94, such that water is inhibited from or completely prevented from passing through the openings 118 in the protruding region 94 and reaching the printed circuit board 134.

With reference to FIGS. 16 and 17, the switch 178 is coupled to a fuel gauge indicator 186. In the illustrated embodiment, the fuel gauge indicator 186 includes a light source or sources (e.g., light-emitting diodes) 190, illustrated schematically in FIG. 17, that are positioned for example on top of or underneath the printed circuit board 134. The light source (or sources) 190 direct light through channels 194 along the cell frame 130, and into a set of light pipes 198 located within the housing 18. In some embodiments, the channels 194 comprise a portion of the light pipes 198. As illustrated in FIG. 16, the light pipes 198 may be held and/or fixed in place with or more of the guide elements 70 along the third sidewall 42 of the housing 18. The light pipes 198 direct the light from the light source (or sources) 190 to the apertures 66 (FIG. 5) located along the first sidewall 34 of the housing 18, to provide an indication of fuel level (e.g., remaining charge of the cells 126). For example, if the fuel level is low, only one of the light pipes 198 may receive light, and thus only one of the apertures 66 may emit light out of the housing 18. In contrast, if the fuel level is high, all of the light pipes 198 may receive light, and thus all of apertures 66 may emit light out of the housing 18. As described above, the light pipes 198 may also or alternatively be used to indicate, for example, charging, critical battery level, fully charged, power output through USB, updating firmware, over current, over temperature, recoverable errors (e.g., reset by releasing a trigger and re-activating a trigger of a tool), non-recoverable errors (e.g., reset by removing and reinstalling the battery pack 10), temporary errors (e.g., recover over time or by reset), and/or permanent errors (e.g., need maintenance). Other embodiments include different numbers and arrangements of light sources 190 and light pipes 198 than that illustrated. In yet other embodiments, light pipes 198 and/or the channels 194 are not provided. Instead, the light from the light source or sources 190 directly moves into the apertures 66 along the housing 18. In some embodiments, the battery pack 10 does not include the switch 178 and/or the fuel gauge indicator 186.

With continued reference to FIG. 16, in the illustrated embodiment the battery pack 10 additionally includes a pad (e.g., rubber pad) 202 positioned along a bottom of the housing 18 (e.g., resting on the bottom wall 30 of the housing 18). The pad 202 includes guides (e.g., raised, protruding surfaces) 206 that facilitate alignment of the cells 126 within the housing 18. While the illustrated embodiment includes three cells 126, other embodiments include different numbers of cells 126 (e.g., just a single cell 126, or two cells 126, or four cells 126, or other numbers of cells 126). The pad 202 may be formed of a soft (e.g., elastomeric) material. In contrast, the housing 18 and/or cover 22 and/or cell frame 130 may be formed, for example, from a harder (e.g., plastic) material. In other embodiments, the pad 202 is not be provided. Instead, for example, the bottom wall 30 itself of the housing 18 includes the guides 206 formed integrally as a single piece with the bottom wall 30, or the battery pack 10 includes other features (e.g., guides, rails, etc.) that facilitate alignment and positioning of the cells 126.

With reference to FIG. 17, in the illustrated embodiment the cell frame 130 additionally includes at least one hook 210 that is used to releasably secure and fasten the cell frame 130 to the printed circuit board 134. In other embodiments, the cell frame 130 is coupled to the printed circuit board 134 via fasteners, welding, or with other structures. In yet other embodiments, the cell frame 130 is formed integrally as a single piece with the printed circuit board 134. In some embodiments, the cell frame 130 is not provided.

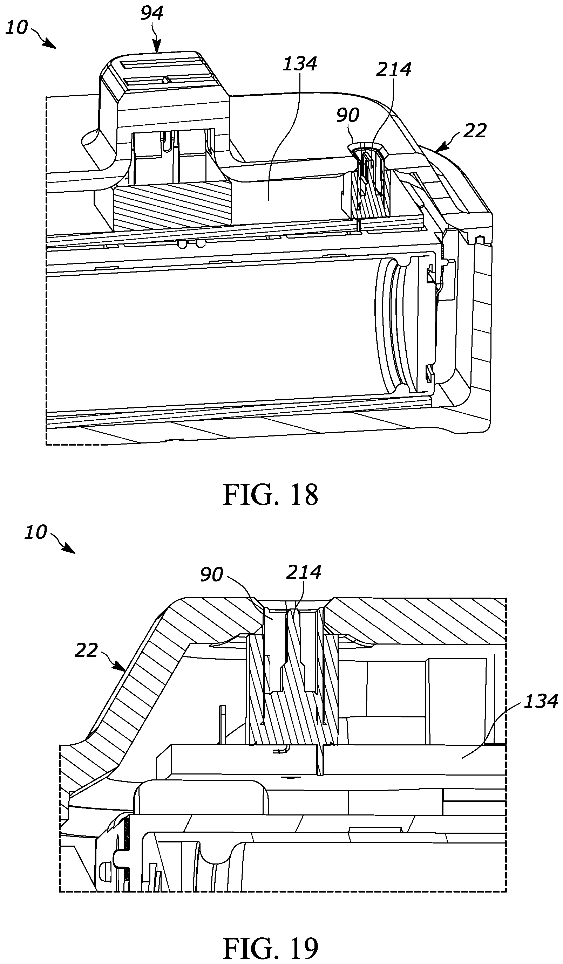

With reference to FIGS. 1, 3, 10, 11, 12, 15, 18, and 19, in the illustrated embodiment the battery pack 10 additionally includes a USB connector 214 (e.g., USB port). The USB connector 214 is a USB-C type, although other embodiments include other types (e.g., USB-A, micro USB, mini USB, lightening, thunderbolt). The USB connector 214 is coupled to the printed circuit board 134, and extends (e.g., upwardly and perpendicularly) from the printed circuit board 134 and through the interior space 26. In the illustrated embodiment, and with reference to FIGS. 18 and 19, an end of the USB connector 214 is positioned at least partially within the aperture 90 on the cover 22, and is accessible through the aperture 90 from outside of the battery pack 10. In other embodiments, a portion of the USB connector 214 extends out of the aperture 90. The USB connector 214 is on the same side or face of the printed circuit board 134 (and the battery pack 10) as the electric contacts 138. In other embodiments, the USB connector 214 is located along a side of the battery pack 10, or along a bottom of the battery pack 10, or is otherwise spaced from and located in a different region than the electric contacts 138. In some embodiments, the USB connector 214 is not provided. In yet other embodiments, the battery pack 10 includes more than one USB connector 214 (e.g., both located on the same side or face of the printed circuit board 134). In some embodiments, the USB connector 214 may be used for charging the battery pack 10. The USB connector 214 may also, or instead, be used for output power for charging another device such as a cell phone. In some embodiments, the USB connector 214 may be used for data transmission such as collecting data about battery usage and statistics and/or updating the firmware of the battery pack 10.

With reference to FIG. 20, the battery charger 14 includes a second, corresponding USB connector 218 (e.g., USB-C type, USB-A type, or other type). The USB connector 218 extends upwardly (e.g., perpendicularly) from a lower wall 222 of the battery charger 14. The battery pack 10 may be coupled to the battery charger 14, such that the USB connector 218 connects to (e.g., is inserted into or receives) the USB connector 214, to charge the battery pack 10. In some embodiments, the USB connector 214 is a port that receives the USB connector 218. In other embodiments, the USB connector 218 is a port that receives the USB connector 214. Additionally, while the USB connectors 214, 218 in the illustrated embodiment are only used for charging the battery pack 10, in yet other embodiments the USB connector 214 and/or the USB connector 218 may be used to exchange or receive information, in addition to or alternatively from being used solely for charging the battery pack 10. For example, the USB connector 214 and/or the USB connector 218 may be used to exchange information between the battery pack 10 and the battery charger 14, and/or between the battery pack 10 and another component (e.g., blender or other tool), and/or between the battery charger 14 and another component (e.g., blender or other tool). In some embodiments, the battery charger 14 does not include the USB connector 218.

With continued reference to FIG. 20, in the illustrated embodiment the battery charger 14 alternatively or additionally include electric contacts 226 that are located along the lower wall 222 (e.g., within a recessed region of the lower wall 222 having a shape that corresponds to the protruding region 94 of the battery pack 10). The electric contacts 226 may be coupled to the electric contacts 138 of the battery pack 10 to charge the battery pack 10 (e.g., in combination with the charging provided by the USB connectors 214, 218). In the illustrated embodiment, the electric contacts 226 include four protruding male contacts (e.g., elongate rectangular pins), including two outer electric contacts 226 and two central electric contacts 226. The two outer electric contacts 226 are wider and larger than the two middle electric contacts. Each of the electric contacts 226 is sized and shaped to press into at least one of the v-shaped receiving ends formed by the arms 140 of the electric contacts 138, to thereby secure and engage the electric contact 226 to at least one of the electric contacts 138. In some embodiments, the battery charger 14 does not include or use the electric contacts 226 for charging, and the charging of the battery pack 10 occurs for example only via the USB connector 218 and the USB connector 214. In other embodiments, the battery pack 10 does not include or use the USB connector 218 or the USB connector 214, and the charging occurs for example only via the electric contacts 226 and the electric contacts 138.

With continued reference to FIG. 20, the battery charger 14 includes a main body 230 having the lower wall 222. The main body 230 also includes a first sidewall 234 extending upwardly from the lower wall 222, a second sidewall 238 extending upwardly from the lower wall 222, a third sidewall 242 extending upwardly from the lower wall 222, and a fourth sidewall 246 extending upwardly from the lower wall 222. Other embodiments include different numbers of sidewalls than that illustrated (e.g., five or six sidewalls). In the illustrated embodiment, the second sidewall 238 and the fourth sidewall 246 each receive and/or otherwise couple to and engage one of the buttons 142 on the battery pack 10 when the battery pack 10 is coupled to the battery charger 14 (FIG. 20 showing only the buttons 142 of the battery pack 10 for reference). In some embodiments, the latches 150 of the buttons 142 engage (e.g., snap onto) a portion or portions of the second sidewall 238 and the fourth sidewall 246 to releasably coupled the battery pack 10 to the battery charger 14. Other embodiments include different arrangements for attaching the battery pack 10 to the battery charger 14. For example, in some embodiments the battery pack 10 includes separate latching features (arms, hooks, etc.) that releasably couple to a surface or surfaces of the battery charger 14, and/or includes surfaces or elements that frictionally engage and releasably couple the battery pack 10 to the battery charger 14. The battery pack 10 overall may be sized and shaped such that it fits tightly into and/or against the battery charger 14. With continued reference to FIG. 20, the battery charger 14 may additionally include a receptacle 250 that is sized and shaped to couple to (e.g., receive and/or engage with) a portion of the battery pack 10, to secure the battery pack 10 to the battery charger 14.

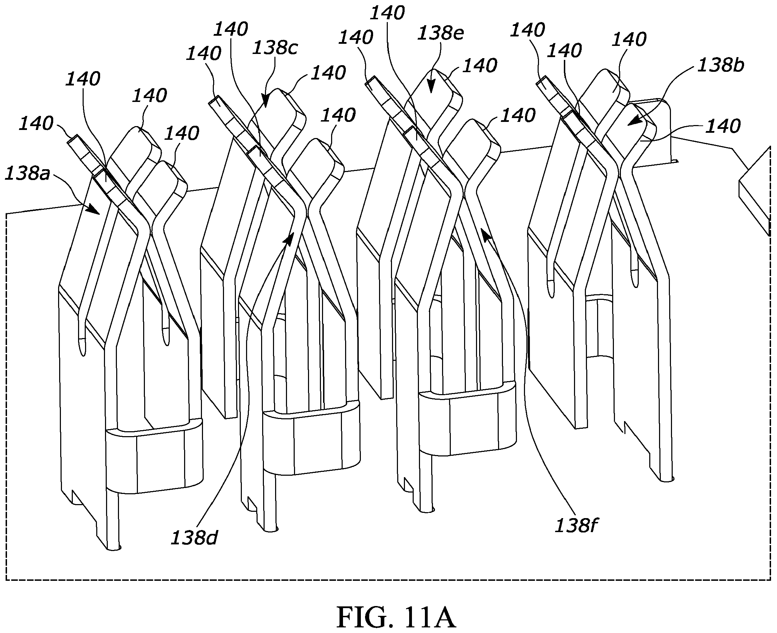

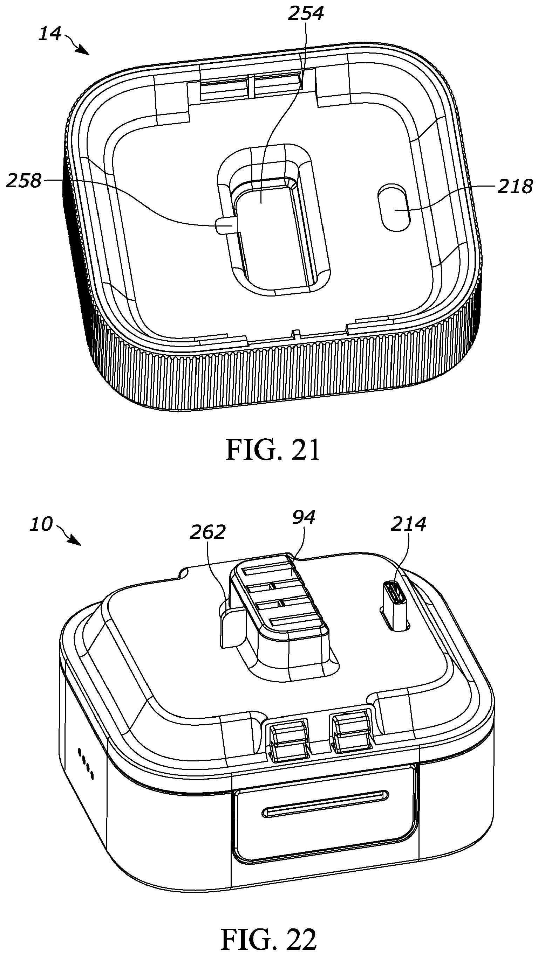

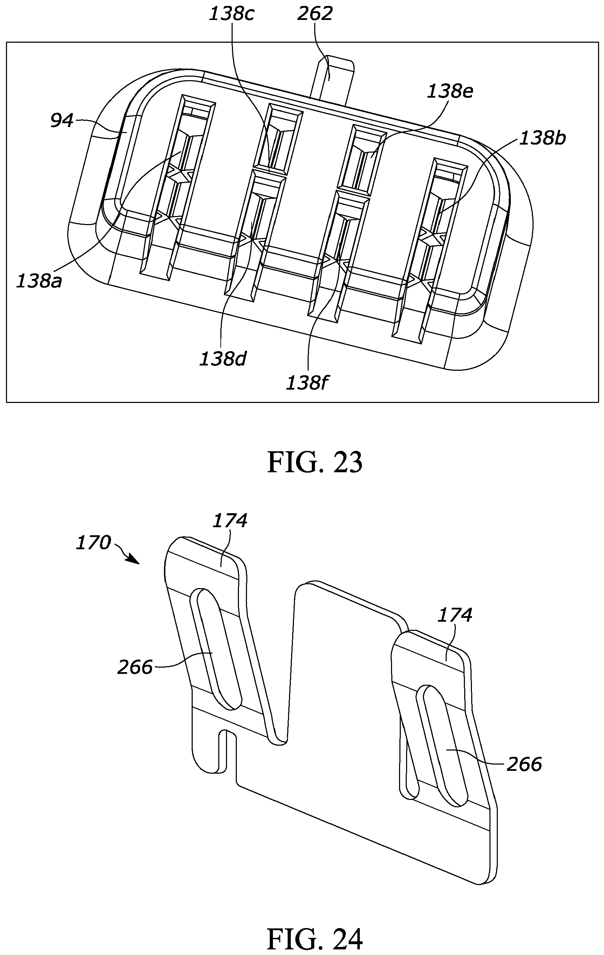

With reference to FIG. 21, in some embodiments the battery charger 14 is charged only via the USB connectors 214, 218 (e.g., via a USB-c interface). The battery charger 14 does not include the electric contacts 226. Instead, the battery charger 14 includes a recess 254 to receive the protruding region 94. Additionally, and with reference to FIGS. 21-23, in some embodiments the battery charger 14 includes a keyed region 258 (e.g., notch, recess, protrusion, etc.) that mates with a corresponding keyed region 262 on the battery pack 10, to facilitate proper alignment. In the illustrated embodiment, the keyed region 258 is a notch, and the corresponding keyed region 262 is a protrusion (e.g., rib) extending from the protruding region 94 of the battery pack cover 22. FIG. 23 further illustrates the various electric contacts 138 seen in FIG. 11A and described above, in combination with the protruding region 94 and its rib 262.

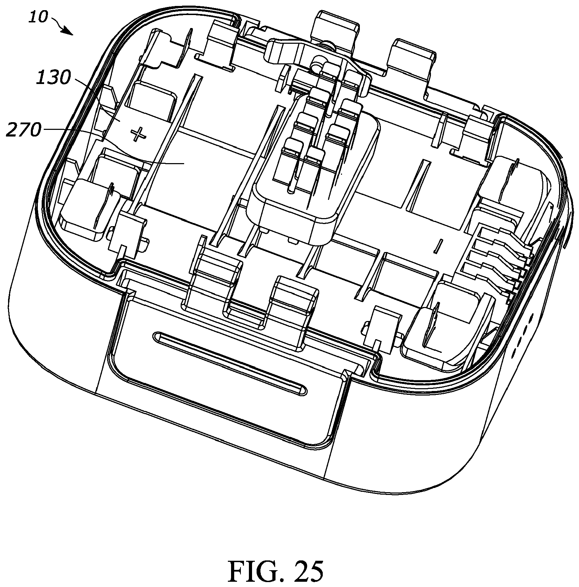

With reference to FIGS. 24 and 25, in some embodiments one or more of the components described herein may be modified (e.g., to be lighter, or more flexible, and/or to provide for easier assembly). As illustrated in FIG. 24, in some embodiments the biasing element 170 may include one or more angled spring arms 174 having cutouts 266, as opposed to the solid spring arm 174 seen for example in FIGS. 3, 11, and 12. With reference to FIG. 25, in some embodiments the cell frame 130 may be modified to include a cutout 270 to permit at least a portion of a negative temperature coefficient (NTC), or other component, to pass through the cell frame 130. The NTC may be sandwiched, for example, between one of the cells 126 and the cell frame 130 (e.g., with a foam) to ensure that the NTC is in close contact with the cell 126.

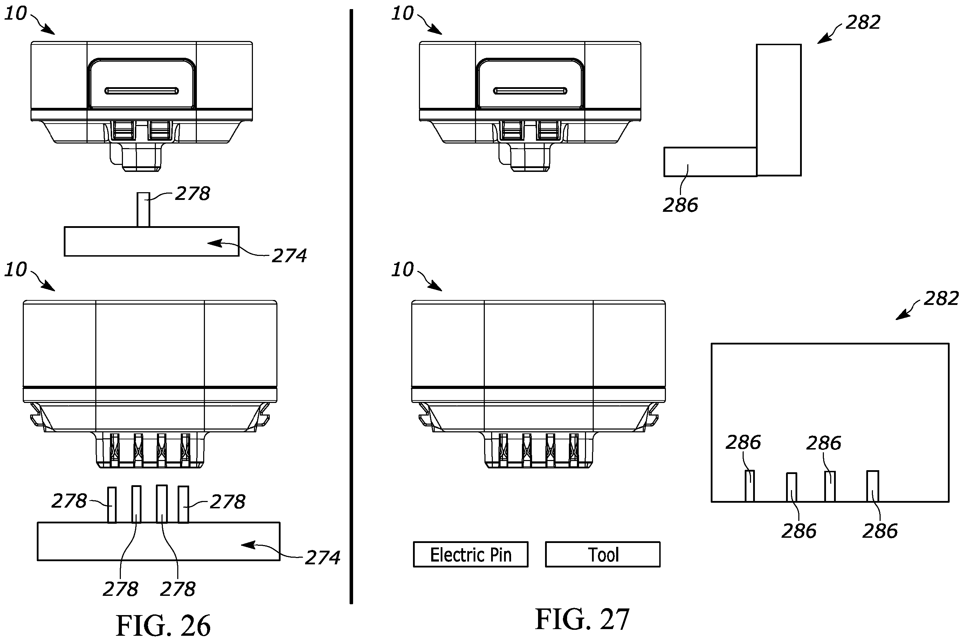

With reference to FIGS. 26 and 27, and as described above, the battery pack 10 may be used in combination with various tools, and attached to different tools in different ways. For example, as illustrated in FIG. 26, the battery pack 10 may be attached to a first tool 274 by moving the battery pack 10 vertically onto a set of electric contacts (e.g., pins) 278 extending vertically upwardly from the first tool 274. As illustrated in FIG. 27, the battery pack 10 may be attached to a second tool 282 by sliding the battery pack 10 horizontally onto a set of electric contacts (e.g., pins) 286 that extend horizontally from the second tool 282. The size, shape, and/or orientation of the apertures 118 and the electric contacts 138 may facilitate this arrangement.

Clause 1 - A battery charger comprising a universal serial bus connector.

Clause 2-- The battery charger of clause 1, wherein the universal serial bus connector extends upwardly from a lower wall of the battery charger.

Clause 3 - The battery charger of clause 2, wherein the battery charger includes a main body having the lower wall, wherein the main body includes a first sidewall extending upwardly from the lower wall, a second sidewall extending upwardly from the lower wall, a third sidewall extending upwardly from the lower wall, and a fourth sidewall extending upwardly from the lower wall.

Clause 4 - The battery charger of clause 1, wherein the universal serial bus connector is a port configured to receive a further universal serial bus connector on a battery pack.

Clause 5 - The battery charger of clause 4, wherein the universal serial bus connector is configured to exchange information with the further universal serial bus connector on the battery pack.

Clause 6 - The battery charger of clause 1, further comprising electric contacts.

Clause 7 - The battery charger of clause 6, wherein the electric contacts are located along a lower wall of the battery charger.

Clause 8 - The battery charger of clause 6, wherein the electric contacts include four protruding male contacts.

Clause 9 - The battery charger of clause 1, wherein the battery charger includes a receptacle sized and shaped to couple to a portion of a battery pack.

Clause 10 - The battery charger of clause 1, wherein the battery charger includes a keyed region in the form of a notch configured to engage a corresponding keyed region on a battery pack.

Clause 11 - A system comprising the battery charger of clause 1, and a battery pack, wherein battery charger includes a main body having a lower wall, a first sidewall extending upwardly from the lower wall, a second sidewall extending upwardly from the lower wall, a third sidewall extending upwardly from the lower wall, and a fourth sidewall extending upwardly from the lower wall, and wherein the battery pack includes latches configured to latch onto the second and fourth sidewalls.

Clause 12 - A system comprising a battery pack, a first tool, and a second tool, wherein the battery pack includes a protruding region having apertures, wherein each aperture extends through both a portion of an upper wall of the protruding region and a first sidewall of the protruding region, wherein the battery pack is attachable to the first tool by moving the protruding region along a first direction into engagement with the first tool, and wherein the battery pack is attachable to the second tool by moving the protruding region along a second, different direction into engagement with the second tool.

Clause 13 - The system of clause 12, wherein the first direction is perpendicular to the second direction.

Clause 14 - The system of clause 12, wherein each aperture extends 90 degrees.

Clause 15 - The system of clause 12, wherein each aperture extends parallel to each of the other apertures.

Clause 16 - The system of clause 12, wherein the battery pack includes six apertures.

Clause 17 - A battery pack comprising a main body having a raised portion, wherein the raised portion includes a plurality of slots, wherein the battery pack includes a plurality of electric contacts exposed within the slots, wherein the electric contacts include a first electric contact having four flexible arms extending vertically upwardly and forming two v-shaped receiving ends, wherein the electric contacts include a second electric contact having four flexible arms extending vertically upwardly and forming two additional v-shaped receiving ends, wherein the electric contacts include a third electric contact, a fourth electric contact, a fifth electric contact, and a sixth electric contact,.

Clause 18 - A battery pack comprising a main body, a cell frame positioned within the main body, a plurality of battery cells positioned within the main body and positioned under the cell frame, and a printed circuit board positioned within the main body and positioned above the cell frame, wherein the cell frame includes a cutout configured to permit a negative temperature coefficient to pass through the cell frame.

Clause 19 - A button for a battery pack, the button including a main body and two latches protruding parallel to one another from one side of the main body, wherein each of the latches includes a flexible arm and an enlarged head at an end of the flexible arm.

Clause 20 - The button of clause 19, wherein the main body extends parallel to a vertical axis, wherein each flexible arm includes a non-linear profile as viewed from a side, and wherein each head includes an angled surface that extends at an oblique angle relative to the vertical axis.

Clause 21 - A battery pack having a housing, and a cover coupled to the housing, wherein the housing and the cover define an interior configured to receive a battery. The battery pack also includes a button movably coupled to the housing, wherein the button includes a latch, wherein the button is configured to be moved from a first position relative to the housing to a second position relative to the housing. The battery pack also includes a switch disposed within the housing, wherein the button is configured to contact the switch when the button is in the second position.

Clause 22 - The battery pack of clause 21, wherein the switch is coupled to a fuel gauge indicator.

Clause 23 - The battery pack of clause 22, wherein the fuel gauge indicator includes a plurality of light pipes coupled to the housing.

Clause 24 - The battery pack of clause 22 or 23, wherein the fuel gauge indicator additionally includes a plurality of apertures along a sidewall of the housing.

Clause 25 - The battery pack of any of clauses 21-24, wherein the button is a first button and the latch is a first latch, wherein the battery pack includes a second button, wherein the second button includes a second latch, wherein the first button is disposed on a first sidewall of the housing, and the second button is disposed on a second, opposite sidewall of the housing.

Clause 26 - The battery pack of any clauses 21-25, further comprising a spring plate positioned between the button and the housing, wherein the spring plate is configured to bias the button toward the first position.

Clause 27 - The battery pack of any of clauses 21-26, wherein the housing includes an aperture, and wherein the latch extends through the aperture.

Clause 28 - The battery pack of any of clauses 21-27, further comprising a plurality of electric contacts disposed within the interior, wherein the cover includes a plurality of slots configured to provide access to the plurality of electric contacts

Clause 29 - The battery pack of clause 28, wherein each of the slots extends 90 degrees.

Clause 30 - The battery pack of any of clauses 21-28, further comprising a universal serial bus connector disposed at least partially within the interior.

Clause 31 - A battery pack having a housing, and a cover coupled to the housing, wherein the housing and the cover define an interior configured to receive a battery. The battery pack also includes a plurality of electric contacts disposed within the interior, wherein the cover includes a plurality of slots configured to provide access to the plurality of electric contacts, wherein each of the slots extends in more than one direction, to facilitate attachment of the battery pack to separate components along multiple directions.

Clause 32 - The battery pack of clause 31, wherein each of the slots extends 90 degrees.

Clause 33 - The battery pack of clause 31 or 32, further comprising a button movably coupled to the housing, wherein the button includes a latch, wherein the button is configured to be moved from a first position relative to the housing to a second position relative to the housing.

Clause 34 - The battery pack of clause 33, further comprising a spring plate positioned between the button and the housing, wherein the spring plate is configured to bias the button away from the housing.

Clause 35 - The battery pack of any of clauses 31-34, further comprising a universal serial bus connector disposed at least partially within the interior.

Clause 36 - A system having a battery pack. The battery pack includes a housing, and a cover coupled to the housing, wherein the housing and the cover define an interior configured to receive a battery. The battery pack also includes a first universal serial bus connector that is disposed at least partially within the interior and is accessible from outside of the battery pack. The system also includes a battery charger having a second universal serial bus connector configured to couple to the first universal serial bus connector to charge the battery pack.

Clause 37 - The system of clause 36, wherein the battery pack additionally includes a plurality of electric contacts disposed within the interior.

Clause 38 - The system of clause 36 or 37, wherein the first universal serial bus connector is a port having an end positioned within an aperture in the cover.

Clause 39 - The system of any of clauses 36-38, wherein the second universal serial bus connector protrudes from a lower wall of the battery charger.

Clause 40 - The system of any of clauses 36-39, wherein the battery pack includes a printed circuit board, wherein the first universal serial bus connector extends perpendicularly from the printed circuit board toward the cover.

Although aspects of the disclosure have been described in detail with reference to certain preferred embodiments, variations and modifications exist within the scope and spirit of one or more independent aspects as described.

## Claims

1. A battery pack comprising:
a housing;
a cover coupled to the housing, wherein the housing and the cover define an interior configured to receive a battery;
a button movably coupled to the housing, wherein the button includes a latch, wherein the button is configured to be moved from a first position relative to the housing to a second position relative to the housing; and
a switch disposed within the housing, wherein the button is configured to contact the switch when the button is in the second position.

2. The battery pack of claim 1, wherein the switch is coupled to a fuel gauge indicator.

3. The battery pack of claim 2, wherein the fuel gauge indicator includes a plurality of light pipes coupled to the housing.

4. The battery pack of claim 2 or 3, wherein the fuel gauge indicator additionally includes a plurality of apertures along a sidewall of the housing.

5. The battery pack of any of the preceding claims, wherein the button is a first button and the latch is a first latch, wherein the battery pack includes a second button, wherein the second button includes a second latch, wherein the first button is disposed on a first sidewall of the housing, and the second button is disposed on a second, opposite sidewall of the housing.

6. The battery pack of any of the preceding claims, further comprising a spring plate positioned between the button and the housing, wherein the spring plate is configured to bias the button toward the first position.

7. The battery pack of any of the preceding claims, wherein the housing includes an aperture, and wherein the latch extends through the aperture.

8. The battery pack of any of the preceding claims, further comprising a plurality of electric contacts disposed within the interior, wherein the cover includes a plurality of slots configured to provide access to the plurality of electric contacts.

9. The battery pack of claim 8, wherein each of the slots extends 90 degrees.

10. The battery pack of any of the preceding claims, further comprising a universal serial bus connector disposed at least partially within the interior.

11. A battery pack comprising:
a housing;
a cover coupled to the housing, wherein the housing and the cover define an interior configured to receive a battery; and
a plurality of electric contacts disposed within the interior, wherein the cover includes a plurality of slots configured to provide access to the plurality of electric contacts, wherein each of the slots extends in more than one direction, to facilitate attachment of the battery pack to separate components along multiple directions.

12. The battery pack of claim 11, wherein each of the slots extends 90 degrees.

13. The battery pack of claim 11 or claim 12, further comprising a button movably coupled to the housing, wherein the button includes a latch, wherein the button is configured to be moved from a first position relative to the housing to a second position relative to the housing.

14. The battery pack of claim 13, further comprising a spring plate positioned between the button and the housing, wherein the spring plate is configured to bias the button away from the housing.

15. The battery pack of any of claims 11-14, further comprising a universal serial bus connector disposed at least partially within the interior.
